# EUROPEAN PATENT SPECIFICATION

(11) **EP 2 938 431 B1**
(45) Date of publication and mention of the grant of the patent: **20.03.2019**
(21) Application number: 13869811.3
(22) Date of filing: 18.12.2013
(51) Int. Cl.: B01J 21/12, B01J 37/00, B01J 37/06

(54) **PREPARATION OF SILICA-ALUMINA COMPOSITION**
HERSTELLUNG EINER ALUMINIUMOXID-SILIKAZUSAMMENSETZUNG
PRÉPARATION D'UNE COMPOSITION DE SILICE-ALUMINE

(30) Priority: 27.12.2012 US 201261746207 P
(43) Date of publication of application: 04.11.2015
(73) Proprietor: PQ Corporation, Malvern, PA 19355-1740 (US)
(72) Inventor: COOPER, David, Allen, Morrisville, PA 19067 (US); ONG, Lay, Hwa, The Metropolis Singapore 138588 (SG); WINTER, Ferry, NL-1031 HW Amsterdam (NL); DOMOKOS, Laszlo, NL-1031 HW Amsterdam (NL); KIJLSTRA, Wiebe, Sjoerd, NL-1031 HW Amsterdam (NL); ALKEMA, Sjoerd, NL-9936 HD Delfzijl (NL)
(74) Representative: Stafford, Jonathan Alan Lewis
(86) International application number: PCT/US2013/076069
(87) International publication number: WO 2014/105558

(56) References cited:
- WO-A1-2009/029579
- US-A- 4 721 696
- US-A- 4 758 330
- US-A1- 2009 062 115
- US-A1- 2009 062 115
- US-A1- 2010 152 033
- US-B2- 7 700 515
- US-B2- 8 278 241

## Description

The present invention relates to a process for preparing a silica-alumina composition containing of from 30 to 70 %wt silica and of from 70 to 30 %wt of alumina.

Processes for preparing silica-alumina compositions are well known in the art. A process which is especially desirable is the so-called pH swing preparation which allows amorphous silica-alumina to be manufactured in a single vessel by changing the pH of the reaction mixture and thereby precipitating silica and alumina. A disadvantage of the pH swing preparation methods is that the surface area of the silica-alumina obtained tends to be relatively low namely well below 300 m²/grams.

Amorphous silica alumina has a range of industrial applications such as in structures or as components of systems that are exposed to high temperatures such as above 500 °C.

A pH swing method for preparing amorphous silica alumina is described in WO-A-2009/029580. The amorphous silica alumina obtained is described to have a surface area from 225 to 325 m²/g. Further information on the compositions obtained is given in WO-A-2009/029579 describing the compositions obtained to have greater than 51 % of the pore volume in pores having a pore diameter greater than 350 Angstroms, more specifically greater than 54 %. An upper limit is less than 90 %, or less than 80 %, or even less than 70 %.

The aim of the present invention is to prepare a silica-alumina composition having a high surface area while still having the advantageous high macroporosity of the silica-alumina prepared by the method of WO-A-2009/029580.

The process of the present invention now relates to a process for preparing a silica-alumina composition containing of from 30 to 70 %wt silica and of from 70 to 30 %wt of alumina, which process comprises:
(a) preparing an aqueous mixture containing aluminum sulfate and having a pH in the range of from 1.0 to 6.5;
(b) adding alkali metal aluminate to the mixture obtained in step (a) to increase the pH of the mixture to within the range of from 7.1 to 12;
(c) adding aluminum sulfate to the mixture obtained in step (b) to lower the pH of the mixture to within the range of from 1.5 to 6.5;
(d) adding alkali metal silicate to the mixture obtained in step (c) to increase the pH of the mixture to within the range of from 6.5 to 11,
wherein the final steps of the preparation process are
(v) adding aluminum sulfate to the mixture obtained in a process comprising steps (a)-(d) to lower the pH of the mixture to within the range of from 2 to 8;
(w) adding alkali metal silicate to the mixture obtained in step (v) to increase the pH of the mixture,
(x) adding to the mixture obtained in step (w) (i) alkali metal aluminate to change the pH of the mixture to of from 7.8 to 12 and (ii) aluminum sulfate to change the pH of the mixture to within the range of from 1.5 to 7.7, wherein step (i) can precede or succeed step (ii),
(y) treating the mixture obtained in step (x) with an alkaline solution having a pH of from 7.5 to 12, and
(z) recovering a precipitate solid from the mixture obtained in step (y) to obtain a silica-alumina composition containing of from 30 to 70 %wt silica and of from 70 to 30 %wt of alumina.

An alternative process further comprises (e) adding aluminum sulfate to the mixture obtained in step (d) to lower the pH of the mixture to within the range of from 1.5 to 7.0 and (f) adding alkali metal aluminate to the mixture obtained in step (e) to increase the pH of the mixture to within the range of from 7.5 to 12.

Without wishing to be bound to any theory, it is thought that the improved surface area of silica-alumina prepared according to the present invention is due to the fact the that the final steps of the precipitation process consist of the addition of aluminum sulfate followed by silicate followed by the addition of aluminate and aluminum sulfate whereby the last two compounds can be added in any order.

Furthermore, it was found that the silica alumina obtained by the present invention contains a relatively large percentage of the alumina on the outside of the particles which can improve extrudability of the silica alumina obtained. An advantage of the process of the present invention itself is that it is reasonably simple and economical.

The alkali metal silicate and alkali metal aluminate applied in the present invention can comprise any alkali metal. Preferred alkali metals are potassium and sodium. Sodium is the most preferred alkali metal for both the silicate and the aluminate.

The process of the present invention involves the preparation of a mixture of water and aluminum sulfate followed by adding aluminate increasing the pH of the mixture, adding aluminum sulfate reducing the pH of the mixture, adding silicate increasing the pH of the mixture, optionally repeating the sequential addition of aluminum sulfate and aluminate, and rounding off the preparation process by adding aluminum sulfate followed by silicate followed by the addition of aluminate and aluminum sulfate which latter compounds are added in either order.

It is believed that this pH swing preparation method provides for the silica-alumina compositions having an increased surface area in combination with unique further physical and catalytic properties.

One of the advantageous features of the inventive pH swing process is that it allows for the use of a single vessel for carrying out the mixing and precipitation reaction of the process. It is noted that in many of the prior art processes for making silica-alumina, multiple processing tanks are required for conducting various steps of the processes, such as, for example, a gelling step may be carried out in a different vessel from one that is used to prepare a silica sol, and different vessels may also be used in carrying out certain of the other steps of the prior art processes. The inventive process, on the other hand, provides for the use of a single mixing or reaction zone into which the various components are added. This eliminates some of the manufacturing complexity that is often associated with the prior art silica-alumina manufacturing processes that require the use of multiple mixing, reaction and transfer tanks or vessels.

Another of the advantages of the inventive pH swing process is that it can significantly reduce the total preparation and precipitation time required for making the final slurry from which is recovered the precipitate solid that comprises the amorphous silica-alumina of the inventive process. The elapsed time for adding to the preparation mixture the components for each of the steps of the one or more pH swings can be minimized to provide for a short total precipitation time for the preparation of the final slurry that includes the precipitate solid. In many cases, the elapsed time for preparation of a final slurry can be significantly shorter than those of prior art processes. The process of the present invention from the first addition of aluminum sulfate to recovering the precipitate solids in step (z) can be carried out in a time frame of from 10 minutes to 6 hours, more specifically of from 15 to 350 minutes, more specifically of from 20 to 300 minutes, most specifically of from 30 to 200 minutes.

In general, the inventive method includes, initially, combining water and aluminum sulfate in such amounts as to provide a mixture that has a pH that is acidic, desirably in the range of from 1.0 to 6.5, and, preferably, from 1 to 6. Most preferably, the initial mixture should have a pH that is in the range of from 1.0 to 5.0, and, especially preferred, from 1.2 to 4.0.

Once this initial mixture is formed, the next step of the method includes adding an amount of aluminate to the initial mixture in such an amount as to increase the pH of the resulting mixture so that it is alkaline, preferably in the range of from 7.1 to 12, and, preferably, from 7.2 to 11. Most preferably, the pH is in the range of from 7.2 to 10.

These two process steps, which include a change in the mixture pH after the addition of the aluminum sulfate to lower the pH of the mixture followed by the separate addition of either the sodium aluminate or sodium silicate to increase the pH of the mixture, are, together, considered herein to be one pH swing.

The time elapsed between the two addition steps of the pH swing method does not need to be large, but it only needs to be sufficiently long so as to allow for the substantial mixing of the added components. In the case where the components are combined together within a single mixing zone, it is desirable for the mixing time to be sufficient to allow for mixing of the components to provide a substantially homogeneous preparation mixture. An important feature of the inventive method is in the application of multiple pH swings in the preparation of the preparation mixture that becomes the final slurry of a silica alumina composition which can be silica and alumina cogel, or, otherwise, a slurry of a precipitate solid comprising silica-alumina.

The mixing or reaction vessel can be any suitable vessel and associated equipment known to those skilled in the art including a vessel that is equipped with means for stirring the contents of the vessel, such as a rotating impeller, to provide for blending and dispersing of the components therein and suspending and dispersing of precipitate solids of the preparation mixture of the inventive method. The vessel may also be equipped with means for exchanging heat with the contents of the vessel in order to provide for the control of the temperature of the vessel contents.

It is desirable to minimize the time required for mixing the components of each addition step of the method to only that which is required to provide a homogenous mixture within the mixing zone. While the mixing time can vary depending upon the type of equipment utilized, the equipment size, and other factors, the time required to combine, blend and disperse the components should, generally, be in the range of from 1 to 30 minutes per addition step.

After the completion of the aforementioned pH swing, aluminum sulfate is again introduced into the mixing zone and mixed with the preparation mixture contained therein in an amount so as to lower its pH to within the range of from 1.5 to 6.5, preferably, from 2 to 6, most preferably, from 2.5 to 5.5, and, especially preferred, 3.1 to 5.1. This step is followed by the introduction of silicate into the mixing zone and mixing it with the preparation mixture therein in an amount so as to increase the pH of the mixture to within the range of from 6.5 to 11, preferably from 6.5 to 9.2, more preferably, from 7 to 8.8, and, most preferably, from 7.2 to 8.5, which completes the second pH swing.

After the completion of the second pH swing, the silica alumina composition obtained can be subjected to a further pH swing or can be subjected to the final steps of the preparation process.

If the silica alumina compositions are to be subjected to a further pH swing, this third pH swing will resemble the first pH swing. The optional third pH swing comprises again introducing aluminum sulfate into the mixing zone and mixing it with the preparation mixture contained therein in an amount so as to lower its pH to within the range of from 1.5 to 7.0, preferably, from 2 to 6, most preferably, from 2.5 to 5.5, and, especially preferred, 3.0 to 5.1. This step is followed by the introduction of aluminate into the mixing zone and mixing it with the preparation mixture therein in an amount so as to increase the pH of the mixture to within the range of from 7.5 to 12, preferably, from 8 to 11, and, most preferably, from 9 to 10, which completes the optional third pH swing.

The final steps of the process of the present invention are a one but last pH swing which resembles the second pH swing and the last pH swing which comprises the addition of aluminum sulfate and aluminate in either order.

In the one but last pH swing, aluminum sulfate is introduced into the mixing zone and mixed with the preparation mixture contained therein in an amount so as to lower its pH, preferably to a pH within the range of from 2 to 8, preferably, from 2.5 to 7.5. If the third pH swing step is applied, the pH in this one but last pH swing most preferably is from 3 to 7.5, more specifically from 4 to 7.5. If no third pH swing is applied and the mixture obtained in step (e) is used in step (w), the pH of the mixture obtained in step (v) is from 2.5 to 6, more specifically of from 2.5 to 5.

This step (v) is followed by the introduction of silicate into the mixing zone and mixing it with the preparation mixture therein in an amount so as to increase the pH of the mixture. If the third pH swing step is applied, the pH of the mixture obtained in step (w) preferably is from 6 to 10, more specifically from 7 to 9.5. If no third pH swing is applied, the pH of the mixture obtained in step (w) preferably is from 2.5 to 6, more specifically of from 2.5 to 5.

The last pH swing comprises (i) adding alkali metal aluminate in such amounts as to provide a mixture that has a pH, desirably in the range of from 7.8 to 12, and, preferably, from 7.8 to 11, and (ii) adding an amount of aluminum sulfate in such an amount as to provide a mixture having a pH to the range of from 1.5 to 7.7, and, preferably, from 2 to 7.7, more specifically of from 3 to 7.5.

Upon the completion of the last pH swing, the mixture is treated with alkaline solution, more specifically alkali metal hydroxide, most preferably sodium hydroxide, The pH of the alkaline solution is of from 7.5 to 12, more preferably of from 8 to 11. This treatment makes that the silica-alumina solids according to the present invention precipitate and separate from the solution. The final step involves recovering precipitate solids contained in the final slurry.

It is preferred to remove from the silica alumina composition any impurities and/or contaminants which may still be present. Impurities and/or contaminants which often will be present are alkali metals, more specifically sodium, and/or sulphates. Therefore, it is preferred for step (z) to additionally comprise removing undesirable components. Preferably, this is done by subjecting the recovered precipitate solid to washing and/or ion exchange. Each of these treatments can be carried out as often as required. In actual practice, the solids preferably are washed with water, subsequently subjected to ion exchange and subsequently again washed with water. The ion exchange preferably is carried out by treating the solids with an ion exchange solution more specifically a solution containing one or more from the group consisting of calcium salts, rare earth metal salts, strong acids such as hydrogen choride and sulphuric acid and ammonium salts, more specifically ammonium chloride and ammonium nitrate. The water wash and/or ion exchange can be repeated as often as required.

The temperature conditions at which the preparation mixture is formed within the mixing zone of the inventive process can affect the properties of its silica-alumina end-product with higher preparation temperatures tending to yield material that is more crystalline and lower preparation temperatures tending yield material that is more amorphous. Thus, it can be desirable to control the mixing and reaction temperatures of the process steps to within certain defined temperature ranges. Generally, the mixing and reaction temperatures of each of the pH swings should be in the range of from 20 °C to 90 °C, preferably, from 30 °C to 80 °C, and, most preferably, from 40 °C to 70 °C. It is especially desirable for the mixing and reaction of the components to take place in as close to isothermal conditions as is feasible with the use of typical commercial mixing and reaction process equipment.

In addition to the control of the mixture pH of the various addition steps of each of the pH swings, it is also desirable to combine the components in amounts such as to provide a final slurry mixture from which the precipitate solids are recovered that has a solids content of from 1 to 30 weight percent (wt. %), based upon the total weight of the preparation mixture. Preferably, the proportion of solids in the final slurry mixture is in the range of from 2 to 20 wt. %, and, most preferably, from 3 to 15 wt. %.

To provide for the desired weight percentage of precipitate solids in the final slurry of the inventive process the relative amounts of the aluminum sulfate, sodium aluminate and sodium silicate for each of the pH swings are adjusted within certain desired ranges. For example, in the pH swings that involve the addition of aluminum sulfate followed by the addition of sodium aluminate, the weight ratio of the sodium aluminate-to-aluminum sulfate for the components added to the preparation mixture should, generally, be in the range of from 0.1 to 1.5, but, preferably, from 0.3 to 1.1, and, most preferably, from 0.5 to 0.9. In the pH swings that involve the addition of aluminum sulfate followed by the addition of sodium silicate, the weight ratio of the sodium silicate-to-aluminum sulfate should, generally, be in the range of from 0.5 to 5, but, preferably, from 1 to 4, and, most preferably, from 1.5 to 3.

The form in which the aluminum sulfate, sodium aluminate and sodium silicate is added to the preparation mixture of the inventive process may be either as a dry solid or as an aqueous solution of the particular component.

Any suitable method known to those skilled in the art for separating the precipitate solids from the remaining fluid of the final slurry or preparation mixture may be used to recover the precipitate solid. Such methods include gravity separation, pressure separation, and vacuum separation and can include the use of equipment such as, for example, belt filters, plate-and-frame filters and rotary vacuum filters.

The filtered precipitate solids, or filter cake, obtained in step (z), are washed with water to remove impurities such as sodium and sulfate salts. The amount of water used to wash the precipitate solids may be any amount that suitably provides a washed powder having a pH that is within the desirable range of from 2 to 7, and, preferably, from 2.5 to 5.5. The weight ratio of water to dry powder used in a single washing step can be in the range of from 0.1:1 to 100:1, preferably, from 0.5:1 to 50:1. One or more washing steps may be used to wash the filtered precipitate solids.

The precipitate obtained in step (z) can be treated further by drying and/or calcining.

The precipitate obtained in step (z) may also be flash-dried, belt-dried or spraydried using any of the suitable drying methods known to those skilled in the art. Preferably, the compositions are subjected to belt drying or flash drying.

The silica alumina composition obtained by the process of the present invention may further be processed by drying or calcination, or both. Drying may be carried out in air or any other suitable atmosphere under otherwise suitable drying conditions at a drying temperature in the range of from 50 °C to 200 °C, preferably, from 60 °C to 180 °C. The composition, preferably after having been dried, may be calcined under suitable calcination conditions, and, in particular, in an oxygen-containing atmosphere, such as, for example, air, at a calcination temperature in the range of from 250 °C to 1000 °C, preferably, from 275 °C to 850 °C, and, most preferably, from 300 to 850 °C.

The silica-alumina composition can have a silica content that is in the range of from 30 to 70 weight percent, with the weight percent being based on the total dry weight of the silica-alumina composition. The preferred silica content, however, is in the range of from 40 to 60 weight percent. The alumina may be present in the silica-alumina composition in an amount in the range of from 30 to 70 weight percent, more specifically, from 40 to 60 weight percent.

A characteristic of the silica-alumina composition obtained by the present invention is that it has a significantly high surface area and total pore volume. Its surface area can be in the range of from 300 m²/g to 500 m²/g, but, more specifically, it is in the range of from 320 m²/g to 450 m²/g, and, more specifically, from 330 m²/g to 420 m²/g. The surface area is to be measured by the BET method according to ASTM test D3663-03.

The total pore volume of the amorphous silica-alumina composition is in the range of from 0.8 cc/gm to 1.3 cc/gm, more specifically, from 0.9 cc/gm to 1.2 cc/gm, and, most specifically, from 0.95 cc/gm to 1.1 cc/gm. The total pore volume is measured according to ASTM D6761-07(2012).

### Example 1

This Example illustrates the pH swing method according to the present invention and the physical properties of amorphous silica-alumina product made by the pH swing method.

The amorphous silica-alumina powder was prepared using a pH swing precipitation process that included four or five pH swings conducted in a single, so-called strike tank. In the preparation procedure, a water heel was first added to the empty strike tank. Subsequently, aqueous solutions of aluminum sulfate, sodium alumina, and sodium silicate were added in a sequential manner in the order and relative amounts as presented in Tables 1-5 to the liquor contained in the strike tank thereby attaining the liquor pH as also indicated in each of the Tables. Table 1 describes the preparation of Composition A, Table 2 describes the preparation of Composition B, Table 3 describes the preparation of Composition C and Table 4 describes the preparation of Composition D.

Table 5 describes the Comparative Composition prepared according to claim 5 of WO-A-2009/029580 except that the precipitates were washed with alkaline solution instead of water.

The various pH swings were performed at a temperature of approximately 55 °C and a constant agitation rate of 43 rpm. The addition and mixing time for each step approximated five minutes. At the end of the last pH swing, the solids content of the final liquor, or slurry, was around 6 wt%. A 10 %wt sodium hydroxide solution having a pH of 9.5 was added to the mixture obtained and the solids were recovered and washed with water. The recovered and washed solids were subjected to ion exchange, washed, and, then, flash-dried to form the final amorphous silica-alumina powder.

**Table 1 - Composition A**

| pH Swing | Step No. | Added Component | Relative Mass of Added Component | pH of Liquor after Addition |
|---|---|---|---|---|
| | 1 | Water heel | 60.4 | 7 |
| First pH swing | 2 | Aluminum sulfate | 5.4 | 1.8 |
| | 3 | Sodium aluminate | 3.3 | 8.9 |
| Second pH swing | 4 | Aluminum sulfate | 1.9 | 3.8 |
| | 5 | Sodium silicate | 5.4 | 8.1 |
| Third pH swing | 6 | Aluminum sulfate | 5.3 | 3.5 |
| | 7 | Sodium aluminate | 4.0 | 9.4 |
| Forth pH swing | 8 | Aluminum sulfate | 1.9 | 6.4 |
| | 9 | Sodium silicate | 5.4 | 8.5 |
| Fifth pH swing | 10 | Aluminum sulfate | 4.6 | 4.1 |
| | 11 | Sodium aluminate | 2.4 | 8.5 |

**Table 2 - Composition B**

| pH Swing | Step No. | Added Component | Relative Mass of Added Component | pH of Liquor after Addition |
|---|---|---|---|---|
| | 1 | Water heel | 64.9 | 7 |
| First pH swing | 2 | Aluminum sulfate | 5.8 | 2.5 |
| | 3 | Sodium aluminate | 3.5 | 7.8 |
| Second pH swing | 4 | Aluminum sulfate | 2.1 | 3.6 |
| | 5 | Sodium silicate | 5.8 | 7.7 |
| Third pH swing | 6 | Aluminum sulfate | 5.6 | 3.3 |
| | 7 | Sodium silicate | 5.8 | 3.8 |
| Forth pH swing | 8 | Sodium aluminate | 4.3 | 10.3 |
| | 9 | Aluminum sulfate | 2.1 | 7.1 |

**Table 3 - Composition C**

| pH Swing | Step No. | Added Component | Relative Mass of Added Component | pH of Liquor after Addition |
|---|---|---|---|---|
| | 1 | Water heel | 60.4 | 7 |
| First pH swing | 2 | Aluminum sulfate | 5.4 | 1.8 |
| | 3 | Sodium aluminate | 3.3 | 8.9 |
| Second pH swing | 4 | Aluminum sulfate | 1.9 | 3.8 |
| | 5 | Sodium silicate | 5.4 | 8.1 |
| Third pH swing | 6 | Aluminum sulfate | 5.3 | 3.5 |
| | 7 | Sodium aluminate | 4.0 | 9.4 |
| Forth pH swing | 8 | Aluminum sulfate | 1.9 | 6.4 |
| | 9 | Sodium silicate | 5.4 | 8.5 |
| Fifth pH swing | 10 | Sodium aluminate | 2.4 | 10.4 |
| | 11 | Aluminum sulfate | 4.6 | 5.4 |

**Table 4 - Composition D**

| pH Swing | Step No. | Added Component | Relative Mass of Added Component | pH of Liquor after Addition |
|---|---|---|---|---|
| | 1 | Water heel | 57.7 | 7 |
| First pH swing | 2 | Aluminum sulfate | 5.1 | 1.8 |
| | 3 | Sodium aluminate | 3.1 | 8.9 |
| Second pH swing | 4 | Aluminum sulfate | 1.8 | 3.8 |
| | 5 | Sodium silicate | 5.2 | 8.1 |
| Third pH swing | 6 | Aluminum sulfate | 5.0 | 3.5 |
| | 7 | Sodium aluminate | 3.8 | 9.4 |
| Forth pH swing | 8 | Aluminum sulfate | 1.8 | 6.4 |
| | 9 | Sodium silicate | 5.2 | 8.5 |
| Fifth pH swing | 10 | Aluminum sulfate | 4.4 | 4.1 |
| | 11 | Sodium aluminate | 2.3 | 8.5 |

**Table 5 - Comparative Composition**

| pH Swing | Step No. | Added Component | Relative Mass of Added Component | pH of Liquor after Addition |
|---|---|---|---|---|
| | 1 | Water heel | 64.3 | |
| First pH swing | 2 | Aluminum sulfate | 6.0 | 3.2 |
| | 3 | Sodium aluminate | 3.3 | 8.3 |
| Second pH swing | 4 | Aluminum sulfate | 2.1 | 4.1 |
| | 5 | Sodium silicate | 6.0 | 9.1 |
| Third pH swing | 6 | Aluminum sulfate | 6.2 | 3.6 |
| | 7 | Sodium aluminate | 4.1 | 9.1 |
| Forth pH swing | 8 | Aluminum sulfate | 2.0 | 6.5 |
| | 9 | Sodium silicate | 6.1 | 9.6 |

Table 6 shows physical properties of the powders obtained. The new materials display higher surface area compared to the composition prepared according to claim 5 of WO-A-2009/29580.

**Table 6 - Physical properties**

| Type | Surface area (m2/g) | Wt. % Al₂O₃ | Wt. % SiO₂ |
|---|---|---|---|
| Comparative | 234 | 46.3 | 51.6 |
| Sample A | 366 | 53.5 | 45.7 |
| Sample B | 369 | 43.0 | 50.2 |
| Sample C | 355 | 54.5 | 46.3 |
| Sample D | 393 | 55.9 | 44.3 |

## Claims

1. A process for preparing a silica-alumina composition containing of from 30 to 70 %wt silica and of from 70 to 30 % wt of alumina, the process comprising:
(a) preparing an aqueous mixture containing aluminum sulfate and having a pH in the range of from 1.0 to 6.5;
(b) adding alkali metal aluminate to the mixture obtained in step (a) to increase the pH of the mixture to within the range of from 7.1 to 12;
(c) adding aluminum sulfate to the mixture obtained in step (b) to lower the pH of the mixture to within the range of from 1.5 to 6.5;
(d) adding alkali metal silicate to the mixture obtained in step (c) to increase the pH of the mixture to within the range of from 6.5 to 11,
wherein the final steps of the preparation process are
(v) adding aluminum sulfate to the mixture obtained in the process comprising steps (a)-(d) to lower the pH of the mixture to within the range of from 2 to 8;
(w) adding alkali metal silicate to the mixture obtained in step (v) to increase the pH of the mixture,
(x) adding to the mixture obtained in step (w) (i) alkali metal aluminate to change the pH of the mixture to of from 7.8 to 12 and (ii) aluminum sulfate to change the pH of the mixture to within the range of from 1.5 to 7.7, wherein step (i) can precede or succeed step (ii),
(y) treating the mixture obtained in step (x) with an alkali metal hydroxide solution having a pH of from 7.5 to 12, and
(z) recovering a precipitate solid from the mixture obtained in step (y) to obtain a silica-alumina composition containing of from 30 to 70 %wt silica and of from 70 to 30 %wt of alumina.

2. Process according to claim 1, which preparation process further comprises, prior to step (v):
(e) adding aluminum sulfate to the mixture obtained in step (d) to lower the pH of the mixture to within the range of from 1.5 to 7.0; and
(f) adding alkali metal aluminate to the mixture obtained in step (e) to increase the pH of the mixture to within the range of from 7.5 to 12.

3. Process according to claim 1 or 2, wherein the alkali metal aluminate is sodium aluminate.

4. Process according to any one of claims 1-3, wherein the alkali metal silicate is sodium silicate.

5. Process according to any one of claims 1-4, wherein step (z) further comprises subjecting the recovered precipitate solid to washing and/or ion exchange.

6. Process according to any one of claims 1-5, which process further comprises drying and/or calcining the silica-alumina composition obtained in step (z).

7. Process according to claim 6, wherein the drying is spray drying.

8. Process according to claim 6, wherein the drying is belt drying or flash drying.

## Patentansprüche

1. Verfahren für die Herstellung einer Siliciumdioxid-Aluminiumoxid-Zusammensetzung, die 30 bis 70 Gew.-% Siliciumdioxid und 70 bis 30 Gew.-% Aluminiumoxid enthält, wobei das Verfahren Folgendes umfasst:
(a) Herstellen einer wässrigen Mischung, die Aluminiumsulfat enthält und einen pH-Wert im Bereich von 1,0 bis 6,5 aufweist;
(b) Zusetzen von Alkalimetallaluminat zu der in Schritt (a) erhaltenen Mischung, um den pH-Wert der Mischung auf innerhalb des Bereichs von 7,1 bis 12 zu erhöhen;
(c) Zusetzen von Aluminiumsulfat zu der in Schritt (b) erhaltenen Mischung, um den pH-Wert der Mischung auf innerhalb des Bereichs von 1,5 bis 6,5 zu reduzieren;
(d) Zusetzen von Alkalimetallsilicat zu der in Schritt (c) erhaltenen Mischung, um den pH-Wert der Mischung auf innerhalb des Bereichs von 6,5 bis 11 zu erhöhen;
wobei die Endschritte des Herstellungsvorgangs Folgende sind:
(v) Zusetzen von Aluminiumsulfat zu der Mischung, die bei dem die Schritt (a)-(d) umfassenden Verfahren erhalten worden ist, um den pH-Wert der Mischung auf innerhalb des Bereichs von 2 bis 8 zu reduzieren;
(w) Zusetzen von Alkalimetallsilicat zu der in Schritt (v) erhaltenen Mischung, um den pH-Wert der Mischung zu erhöhen;
(x) Zusetzen zu der in Schritt (w) erhaltenen Mischung (i) von Alkalimetallaluminat, um den pH-Wert der Mischung von 7,8 auf 12 zu ändern und (ii) von Aluminiumsulfat, um den pH-Wert der Mischung auf innerhalb des Bereichs von 1,5 bis 7,7 zu ändern, wobei der Schritt (i) dem Schritt (ii) vorausgehen oder folgen kann;
(y) Behandeln der in Schritt (x) erhaltenen Mischung mit einer Alkalimetallhydroxidlösung, die einen pH-Wert von 7,5 bis 12 aufweist, und
(z) Gewinnen eines Präzipitatfeststoffs aus der in Schritt (y) erhaltenen Mischung, um eine Siliciumdioxid-Aluminiumoxid-Zusammensetzung zu erhalten, die 30 bis 70 Gew.-% Siliciumdioxid und 70 bis 30 Gew.-% Aluminiumoxid enthält.

2. Verfahren nach Anspruch 1, welches Herstellungsverfahren ferner vor Schritt (v) Folgendes umfasst:
(e) Zusetzen von Aluminiumsulfat zu der in Schritt (d) erhaltenen Mischung, um den pH-Wert der Mischung auf innerhalb des Bereichs von 1,5 bis 7,0 zu reduzieren; und
(f) Zusetzen von Alkalimetallaluminat zu der in Schritt (e) erhaltenen Mischung, um den pH-Wert der Mischung auf innerhalb des Bereichs von 7,5 bis 12 zu erhöhen.

3. Verfahren nach Anspruch 1 oder 2, wobei das Alkalimetallaluminat Natriumaluminat ist.

4. Verfahren nach einem der Ansprüche 1-3, wobei das Alkalimetallsilicat Natriumsilicat ist.

5. Verfahren nach einem der Ansprüche 1-4, wobei der Schritt (z) ferner das Unterwerfen des gewonnenen Präzipitatfeststoffs Waschen und/oder Ionenaustausch umfasst.

6. Verfahren nach einem der Ansprüche 1-5, welches Verfahren ferner das Trocknen und/oder das Calcinieren der in Schritt (z) erhaltenen Siliciumdioxid-Aluminiumoxid-Zusammensetzung umfasst.

7. Verfahren nach Anspruch 6, wobei das Trocknen Sprühtrocknen ist.

8. Verfahren nach Anspruch 6, wobei das Trocknen Bandtrocknen oder Flash-Trocknen ist.

## Revendications

1. Procédé de préparation d'une composition de silice-alumine contenant de 30 à 70 % en pds de silice et de 70 à 30 % en pds d'alumine, le procédé comprenant:
(a) la préparation d'un mélange aqueux contenant du sulfate d'aluminium et ayant un pH situé dans la plage de 1,0 à 6,5;
(b) l'addition d'aluminate de métal alcalin au mélange obtenu dans l'étape (a) pour accroître le pH du mélange à l'intérieur de la plage de 7,1 à 12;
(c) l'addition de sulfate d'aluminium au mélange obtenu dans l'étape (b) pour réduire le pH du mélange à l'intérieur de la plage de 1,5 à 6,5;
(d) l'addition de silicate de métal alcalin au mélange obtenu dans l'étape (c) pour accroître le pH du mélange à l'intérieur de la plage de 6,5 à 11,
les étapes finales du procédé de préparation étant
(v) l'addition de sulfate d'aluminium au mélange obtenu dans le procédé comprenant les étapes (a) à (d) pour réduire le pH du mélange à l'intérieur de la plage de 2 à 8;
(w) l'addition de silicate de métal alcalin au mélange obtenu dans l'étape (v) pour accroître le pH du mélange,
(x) l'addition au mélange obtenu dans l'étape (w) (i) d'aluminate de métal alcalin pour changer le pH du mélange de 7,8 à 12 et (ii) de sulfate d'aluminium pour changer le pH du mélange à l'intérieur de la plage de 1,5 à 7,7, où l'étape (i) peut précéder ou succéder à l'étape (ii),
(y) le traitement du mélange obtenu dans l'étape (x) avec une solution d'hydroxyde de métal alcalin ayant un pH de 7,5 à 12, et
(z) la récupération d'un solide précipité du mélange obtenu dans l'étape (y) pour obtenir une composition de silice-alumine contenant de 30 à 70 % en pds de silice et de 70 à 30 % en pds d'alumine.

2. Procédé selon la revendication 1, lequel procédé de préparation comprend en outre, avant l'étape (v):
(e) l'addition de sulfate d'aluminium au mélange obtenu dans l'étape (d) pour réduire le pH du mélange à l'intérieur de la plage de 1,5 à 7,0; et
(f) l'addition d'aluminate de métal alcalin au mélange obtenu dans l'étape (e) pour accroître le pH du mélange à l'intérieur de la plage de 7,5 à 12.

3. Procédé selon la revendication 1 ou 2, l'aluminate de métal alcalin étant l'aluminate de sodium.

4. Procédé selon l'une quelconque des revendications 1 à 3, le silicate de métal alcalin étant le silicate de sodium.

5. Procédé selon l'une quelconque des revendications 1 à 4, l'étape (z) comprenant en outre la soumission du solide précipité récupéré au lavage et/ou à l'échange d'ions.

6. Procédé selon l'une quelconque des revendications 1 à 5, lequel procédé comprend en outre le séchage et/ou la calcination de la composition de silice-alumine obtenue dans l'étape (z).

7. Procédé selon la revendication 6, le séchage étant le séchage par pulvérisation.

8. Procédé selon la revendication 6, le séchage étant un séchage sur bande transporteuse ou un séchage instantané.
